# EUROPEAN PATENT APPLICATION

(11) **EP 4 746 088 A1**
(43) Date of publication of application: **20.05.2026**
(21) Application number: 24859553.0
(22) Date of filing: 21.08.2024
(51) Int. Cl.: H01M 10/04, H01G 11/26, H01G 11/52, H01G 11/58, H01M 10/0587

(54) **POWER STORAGE ELEMENT**

(30) Priority: 28.08.2023 JP 2023138387
(71) Applicant: GS Yuasa International Ltd., Kisshoin, Minami-ku, Kyoto-shi, Kyoto 601-8520 (JP)
(72) Inventor: OGI, Kenta, Kyoto-shi, Kyoto 601-8520 (JP)
(74) Representative: Isarpatent
(86) International application number: PCT/JP2024/029547
(87) International publication number: WO 2025/047520

(57) **Abstract**

An energy storage device according to one aspect of the present invention includes: an electrode body of a flat shape formed by winding a positive electrode and a negative electrode with a separator interposed therebetween; an electrolyte solution; and a container accommodating therein the electrode body and the electrolyte solution, in which a winding axis of the electrode body is disposed along a horizontal direction, an excess electrolyte solution, which is a part of the electrolyte solution, is present between the electrode body and the container, and in a cross section perpendicular to the winding axis of the electrode body, two or more voids which are located below a liquid surface of the excess electrolyte solution and on a vertical line passing through the winding axis are present within the electrode body.

## Description

### TECHNICAL FIELD

The present invention relates to an energy storage device.

### BACKGROUND ART

Chargeable and dischargeable energy storage devices (secondary batteries, capacitors, and the like) are being used in vehicles such as electric vehicles, home appliances, and various devices such as mobile phones. As the energy storage device, there is known an energy storage device including a wound type electrode body in which a strip-shaped positive electrode and a strip-shaped negative electrode are wound to overlap one another with a strip-shaped separator interposed therebetween (see Patent Literatures 1 and 2). Such an electrode body is accommodated in a container together with an electrolyte solution to constitute an energy storage device.

### CITATION LIST

### Patent Literature

Patent Literature 1: Japanese Unexamined Patent Application Publication No. 2013-16440
Patent Literature 2: Japanese Unexamined Patent Application Publication No. 2013-191467

### DISCLOSURE OF INVENTION

### PROBLEMS TO BE SOLVED BY THE INVENTION

In an energy storage device, an electrolyte solution with which an interior of an electrode body is impregnated may flow out of the electrode body due to charge and discharge cycles, and the amount of the electrolyte solution with which the interior of the electrode body is impregnated may decrease or be depleted. Depletion of the electrolyte solution within the electrode body causes performance of the energy storage device to be deteriorated such as causing a decrease in a discharge capacity. In particular, in a wound type electrode body, an electrolyte solution can substantially flow in only from an end surface of the electrode body perpendicular to a winding axis. Therefore, it is difficult for the electrolyte solution which has flowed out from the electrode body to return to the electrode body, and a phenomenon as described above is likely to occur.

An object of the present invention is to provide an energy storage device including a wound type electrode body, and exhibiting a high capacity retention rate after charge and discharge cycles.

### MEANS FOR SOLVING THE PROBLEMS

An energy storage device according to one aspect of the present invention includes: an electrode body of a flat shape formed by winding a positive electrode and a negative electrode with a separator interposed therebetween; an electrolyte solution; and a container accommodating therein the electrode body and the electrolyte solution, in which a winding axis of the electrode body is disposed along a horizontal direction, an excess electrolyte solution, which is a part of the electrolyte solution, is present between the electrode body and the container, and in a cross section perpendicular to the winding axis of the electrode body, two or more voids which are located below a liquid surface of the excess electrolyte solution and on a vertical line passing through the winding axis are present within the electrode body.

### EFFECT OF THE INVENTION

According to one aspect of the present invention, it is possible to provide an energy storage device including a wound type electrode body, and exhibiting a high capacity retention rate after charge and discharge cycles.

### BRIEF DESCRIPTION OF DRAWINGS

[FIG. 1] FIG. 1 is a schematic see-through perspective view illustrating an energy storage device according to one embodiment of the present invention.
[FIG. 2] FIG. 2 is a schematic cross-sectional view of the energy storage device taken along line I-I of FIG. 1.
[FIG. 3] FIG. 3 is a schematic view illustrating an energy storage apparatus constituted by assembling a plurality of energy storage devices according to one embodiment of the present invention.
[FIG. 4] FIG. 4 is a schematic cross-sectional view illustrating an energy storage device according to another embodiment of the present invention.

### DESCRIPTION OF EMBODIMENTS

First, an outline of an energy storage device disclosed in the present specification will be described.
[1] An energy storage device according to one aspect of the present invention includes: an electrode body of a flat shape formed by winding a positive electrode and a negative electrode with a separator interposed therebetween; an electrolyte solution; and a container accommodating therein the electrode body and the electrolyte solution, in which a winding axis of the electrode body is disposed along a horizontal direction, an excess electrolyte solution, which is a part of the electrolyte solution, is present between the electrode body and the container, and in a cross section perpendicular to the winding axis of the electrode body, two or more voids which are located below a liquid surface of the excess electrolyte solution and on a vertical line passing through the winding axis are present within the electrode body.

The energy storage device according to [1] described above is an energy storage device including a wound type electrode body, and a capacity retention rate to be exhibited after charge and discharge cycles is high. Although the reason why such an advantageous effect is produced is unclear, the following factors are presumed. One of the reasons why the capacity retention rate to be exhibited after the charge and discharge cycles is low in a conventional energy storage device including the flat-shaped wound type electrode body as described above is that the electrolyte solution within the electrode body flows out of the electrode body due to the charge and discharge cycles, and the electrolyte solution is depleted in the electrode body. In contrast, in the case of the energy storage device according to [1] described above, in a cross section perpendicular to the winding axis of the electrode body, two or more voids, which are located below the liquid surface of the excess electrolyte solution and on the vertical line passing through the winding axis, are present within the electrode body. By virtue of these two or more voids, the electrolyte solution can be sufficiently held within the electrode body. Thus, according to the energy storage device described in [1] above, it is presumed that the depletion of the electrolyte solution within the electrode body due to repetition of the charge and discharge cycles is suppressed, and the capacity retention rate to be exhibited after the charge and discharge cycles is increased.

Note that the void within the electrode body refers to a void that is confirmed in an image obtained by binarization processing performed on an X-ray computed tomography (CT) image. Specifically, the void is that confirmed in an image obtained by an analysis method as described below. The position of the liquid surface of the excess electrolyte solution is also confirmed by the same X-ray CT image.

### (1) Acquiring cross-sectional image of energy storage device

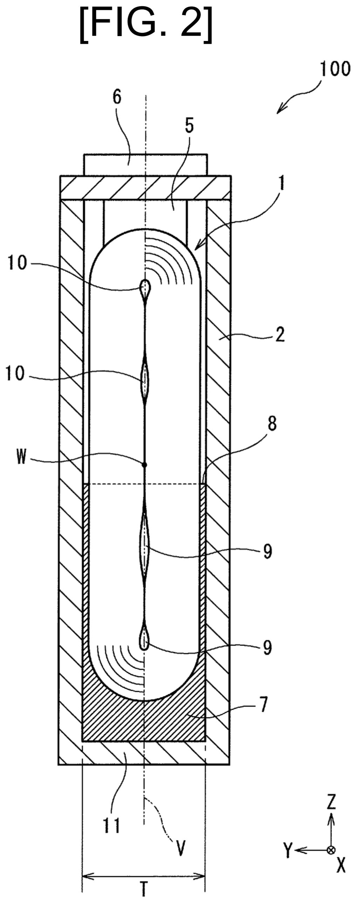

A microfocus X-ray CT scanner (inspeXio SMX-225CT FPD HR, manufactured by Shimadzu Corporation) is used to acquire a cross-sectional image of an electrode body perpendicular to a winding axis of the electrode body in the energy storage device to be measured. As the conditions for acquiring the cross-sectional image, an imaging mode is set to three-dimensional CT, an image size is set to 512 pixels both vertically and horizontally, a slice thickness is set to 77 µm, a slice-to-slice distance is set to 77 µm, a voxel size is set to 77 µm, an imaging field of view is set to 39.3 mm φ, and the number of views is set to 1800. In the energy storage device to be measured, a cross-sectional image of a surface perpendicular to the winding axis of the electrode body (i.e., a YZ plane in FIG. 2) is acquired, and the obtained cross-sectional image is saved as an image file. In the obtained cross-sectional image, the position of an intersection of the vertical line passing through the winding axis of the electrode body and the liquid surface of the excess electrolyte solution is assumed as the position of the liquid surface of the excess electrolyte solution.

### (2) Cutting out outline of electrode body

An outline of the electrode body is cut out from the acquired cross-sectional image of the electrode body by using an image cutout function of Adobe Photoshop Elements 11, which is image-editing software.

### (3) Binarization processing

For the cross-sectional image of the electrode body which has been obtained by cutting out the outline thereof, WinROOF2013, which is image processing software, is used to count the number of voids within the electrode body. Here, the counting of the voids is performed for a central region located on the vertical line passing through the winding axis in the cross-sectional image of the electrode body which has been obtained by cutting out the outline thereof. Specifically, first, binarization processing is performed by setting, as a threshold value, a density that is 80% lower than the density at which intensity of the brightness is maximized. On the side that is lower in brightness density, a pixel group of 10 pixels or less is assumed as noise, and a pixel group of 11 pixels or more is counted as a void.

The winding axis of the electrode body may be set to a central point of the electrode body in a height direction (Z-axis direction in FIG. 2) and a thickness direction (Y-axis direction in FIG. 2). Further, the above-described two or more voids not only include the case where the voids are definitely located on the vertical line passing through the winding axis of the electrode body, but also the case where the voids are substantially located on the vertical line passing through the winding axis of the electrode body. For example, in a case where the positive electrode, the negative electrode, and the separator, which are the members constituting the electrode body, are in a stacked state by being bent or made to meander, a part of or all of the two or more voids may be shifted from the vertical line passing through the winding axis of the electrode body. It is sufficient if the two or more voids are located on an inner side of a member (for example, the separator) which constitutes an innermost periphery of the electrode body, for example.

[2] In the energy storage device according to [1] described above, in the cross section perpendicular to the winding axis of the electrode body, substantially no void may be present within the electrode body at any position other than on the vertical line passing through the winding axis.

When a void is present within the electrode body at any position other than on the vertical line passing through the winding axis, such a void is usually located between the positive electrode and the negative electrode and increases a distance between the electrodes. As a result, charge and discharge performance of the energy storage device may be deteriorated. Therefore, as in the energy storage device according to [2] described above, if substantially no void is present within the electrode body at any position other than on the vertical line passing through the winding axis, the charge and discharge performance of the energy storage device can be enhanced.

The above "substantially no void is present" means that no voids are confirmed in the image obtained by the binarization processing performed on the X-ray CT image.

[3] In the energy storage device according to [1] or [2] described above, the two or more voids may be regions surrounded by the separator or a porous member other than the separator.

According to the energy storage device described in [3] above, since the electrolyte solution stored within the voids is effectively supplied to the positive electrode and the negative electrode, the capacity retention rate to be exhibited after charge and discharge cycles can be further increased.

[4] In the energy storage device according to any one of [1] to [3] described above, in the cross section perpendicular to the winding axis of the electrode body, a ratio of a total area of the two or more voids to an area of the electrode body below the liquid surface of the excess electrolyte solution may be greater than 4%.

According to the energy storage device described in [4] above, since a particularly sufficient amount of electrolyte solution can be stored within the two or more voids, the capacity retention rate to be exhibited after charge and discharge cycles can be further increased.

The ratio of the total area of the two or more voids to the area of the electrode body below the liquid surface of the excess electrolyte solution is a value calculated on the basis of the image obtained by the binarization processing performed on the X-ray CT image. Further, in the area of the electrode body below the liquid surface of the excess electrolyte solution, the total area of the two or more voids described above is not included.

[5] In the energy storage device according to any one of [1] to [4] described above, a thickness of the electrode body in a dry state and under no load may be 0.94 or less as a ratio to an inside dimension of the container in a thickness direction of the electrode body.

Also with the energy storage device described in [5] above, since a particularly sufficient amount of electrolyte solution can be stored within the two or more voids, the capacity retention rate to be exhibited after charge and discharge cycles can be further increased.

The above "thickness of the electrode body in a dry state and under no load" refers to the thickness of a central portion (the central portion in a width direction and a height direction orthogonal to the thickness direction of the electrode body) of the electrode body in the dry state and under no load. Further, the above "inside dimension of the container in a thickness direction of the electrode body" refers to the inside dimension of a central portion (the central portion in a width direction and a height direction orthogonal to a thickness direction of the container) of the container. The thickness of the electrode body in the dry state and under no load corresponds to a thickness measured by the following procedure. A constant current discharge is performed for the energy storage device at a current of 0.05 C until the SOC is decreased to 0%, and then a constant voltage discharge for 2 hours is successively performed to bring the energy storage device into a discharged state. The energy storage device is disassembled to take out the electrode body. The electrolyte solution adhering to the taken out electrode body is sufficiently washed with dimethyl carbonate, and the electrode body which has been vacuum-dried at room temperature for 24 hours is used as a measurement sample. The thickness of the dried measurement sample (electrode body), in the state of under no load, in a direction in which the positive electrode and the negative electrode are stacked is measured. In addition, in a case where a plurality of electrode bodies are accommodated in the container, the thickness is assumed as a total thickness of the thicknesses of the plurality of electrode bodies made to overlap one another in the thickness direction.

Further, the inside dimension of the container in the thickness direction of the electrode body is measured by cross-sectional observation using an X-ray CT image or the like of the energy storage device.

An energy storage device, an energy storage apparatus, and a method for manufacturing an energy storage device according to one embodiment of the present invention, and other embodiments of the present invention will be described in detail. The names of constituent members (constituent elements) used in the embodiments may be different from the names of constituent members (constituent elements) used in the background art.

### <Energy Storage Device>

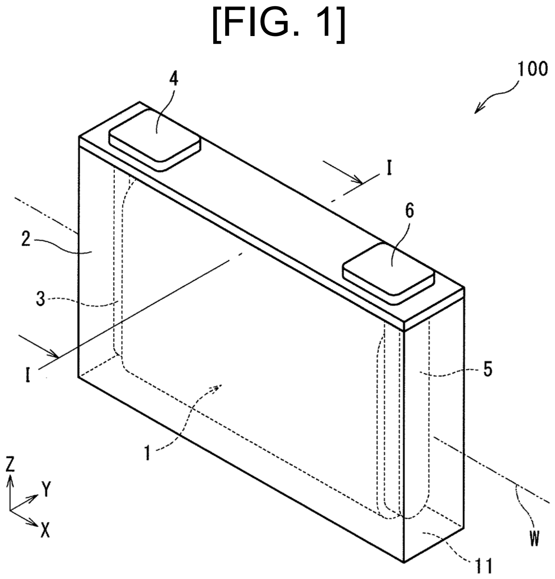

An energy storage device 100 according to one embodiment of the present invention illustrated in FIG. 1 includes an electrode body 1, an electrolyte solution (not shown), and a container 2 for accommodating therein the aforementioned elements. In the present embodiment, a single electrode body 1 is accommodated in the container 2. The energy storage device 100 is a secondary battery which is an example of the energy storage device. The secondary battery may be a non-aqueous electrolyte solution secondary battery such as a lithium-ion battery. The electrode body 1 is an electrode body of a flat shape formed by winding a strip-shaped positive electrode and a strip-shaped negative electrode with a strip-shaped separator interposed therebetween. The electrode body 1 is disposed in the container 2 such that a winding axis W of the electrode body 1 conforms to a horizontal direction (X-axis direction), and a thickness direction of the electrode body 1 also conforms to a horizontal direction (Y-axis direction). That is, the electrode body 1 is disposed such that a longitudinal direction of the electrode body 1 in a cross section (FIG. 2) perpendicular to the winding axis W of the electrode body 1 conforms to the height direction (Z-axis direction). In the energy storage device 100, the winding axis W of the electrode body 1 is parallel to a bottom surface 11 of the container 2. The energy storage device 100 further includes a positive electrode connecting member 3, a positive electrode external terminal 4, a negative electrode connecting member 5, and a negative electrode external terminal 6. A positive electrode of the electrode body 1 is electrically connected to the positive electrode external terminal 4 via the positive electrode connecting member 3. A negative electrode of the electrode body 1 is electrically connected to the negative electrode external terminal 6 via the negative electrode connecting member 5.

The container 2 is an airtight container which accommodates therein the electrode body 1 and the like, and in which an electrolyte solution is sealed. The container 2 illustrated in FIG. 1 is an angular container having a substantially rectangular parallelepiped shape. A material of the container 2 may be, for example, a resin or a metal as long as the material has sealability capable of sealing the electrolyte solution and a strength capable of protecting the electrode body 1.

As described above, the electrolyte solution is accommodated in the container 2 together with the electrode body 1. A part of the electrolyte solution is impregnated into the electrode body 1, and as illustrated in FIG. 2, a remainder of the electrolyte solution is accumulated on the bottom surface side of the container 2 as an excess electrolyte solution 7. That is, the excess electrolyte solution 7 is present between the electrode body 1 and the container 2.

A part of the electrode body 1 is in contact with the excess electrolyte solution 7. A position of a liquid surface 8 of the excess electrolyte solution 7 can be set to, for example, the position in a range of 2/10 or more and 9/10 or less with reference to the height (the length in the Z-axis direction) of the electrode body 1. In other words, the electrode body 1 can be set in a state of being immersed in the excess electrolyte solution 7 at the position in the range of 2/10 or more and 9/10 or less in a height direction thereof. The position of the liquid surface 8 of the excess electrolyte solution 7 may be at the position that is 3/10 or more or may be at the position that is 4/10 or more (for example, 5/10 or more or 6/10 or more) with reference to the height of the electrode body 1. The position of the liquid surface 8 of the excess electrolyte solution 7 may be at the position that is 8/10 or less or may be at the position that is 7/10 or less with reference to the height of the electrode body 1. The position of the liquid surface 8 of the excess electrolyte solution 7 may be at not less than any of the lower limits described above and not more than any of the upper limits described above.

In the energy storage device 100, as illustrated in FIG. 2, in a cross section perpendicular to the winding axis W of the electrode body 1, two or more voids 9 (specifically, two voids 9 in FIG. 2) which are located below the liquid surface 8 of the excess electrolyte solution 7 and on a vertical line V passing through the winding axis W are present within the electrode body 1. The electrolyte solution is usually present within these voids 9. In the energy storage device 100, by virtue of the presence of such two or more voids 9 within the electrode body 1, the capacity retention rate to be exhibited after charge and discharge cycles is increased.

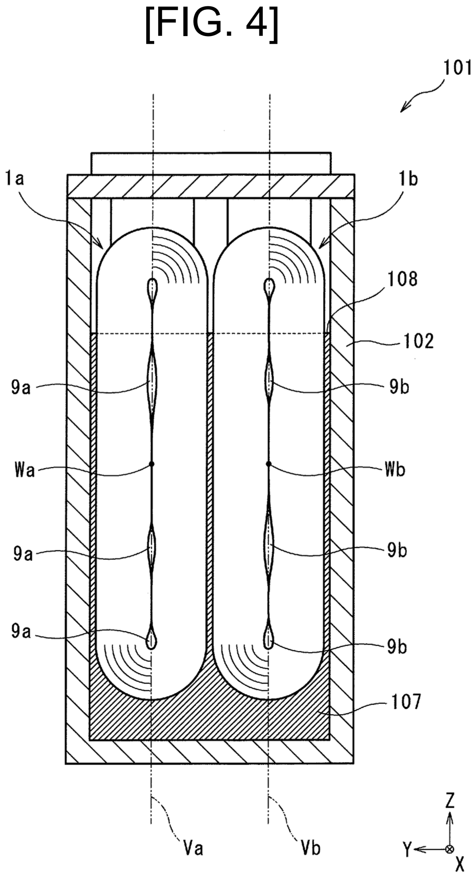

The number of two or more voids 9 that are located below the liquid surface 8 of the excess electrolyte solution 7 and on the vertical line V passing through the winding axis W within a single electrode body 1 is not limited to two. The lower limit of the number of voids 9 may be 2, or may be 3 (see FIG. 4) or 4. The number of voids 9 is preferably three or more. Meanwhile, the upper limit of the number of voids 9 may be, for example, 5, or may be 4 or 3. The number of voids 9 may be not less than any of the lower limits described above and not more than any of the upper limits described above. The number of voids 9 can be adjusted by the position of the liquid surface 8 of the excess electrolyte solution 7, the ratio of the thickness of the electrode body 1 in a dry state and under no load, which will be described later, to an inside dimension T of the container 2 in the thickness direction (Y-axis direction) of the electrode body 1, and the like.

The two or more voids 9 should preferably be regions surrounded by a separator or a porous member other than the separator. The separator is usually formed of a porous member. In a case where the two or more voids 9 are regions surrounded by a separator or a porous member other than the separator, the electrolyte solution stored within the two or more voids 9 passes through the separator or the porous member other than the separator and is effectively supplied to the positive electrode and the negative electrode. Therefore, the capacity retention rate to be exhibited after charge and discharge cycles can be further increased. For example, in a case where the electrode body 1 is obtained by stacking a first separator, a first electrode (one of the positive electrode and the negative electrode), a second separator, and a second electrode (an other one of the positive electrode and the negative electrode) in this order, and winding these elements in the stacked state with the first separator side made to face inward, the first separator is located at the innermost periphery of the electrode body 1. Therefore, in such a case, two or more voids 9 may be formed in a region surrounded by the first separator at the innermost periphery. Further, in a case where a winding core (also referred to as a center core or the like) is formed by winding a strip-shaped porous member, for example, and the electrode body 1 of the wound type is fabricated with the winding core being set at the center, the strip-shaped porous member forming the winding core is positioned at the innermost periphery of the electrode body 1. Therefore, in such a case, two or more voids 9 may be formed in the inner part of the winding core at the innermost periphery, that is, in a region surrounded by the strip-shaped porous member. Examples of the porous member forming the winding core include a material which is the same as that of the separator to be described later.

In the cross section (FIG. 2) perpendicular to the winding axis W of the electrode body 1, a ratio (S2/S1) of a total area (S2) of the two or more voids 9 to an area (S1) of the electrode body 1 below the liquid surface 8 of the excess electrolyte solution 7 is preferably greater than 4%. The lower limit of the ratio (S2/S1) is more preferably 5%, for example, and still more preferably 6%. In some embodiments, the lower limit of the ratio (S2/S1) is more preferably 10%, or may be yet more preferably 20%. If the ratio (S2/S1) is greater than 4%, and further, is not less than the above-described lower limit, a particularly sufficient amount of electrolyte solution can be stored within the two or more voids 9. Thus, the capacity retention rate to be exhibited after charge and discharge cycles can be further increased. Meanwhile, the upper limit of the ratio (S2/S1) is preferably 50%, more preferably 40%, and still more preferably 35%. In some embodiments, the upper limit of the ratio (S2/S1) may be 20%, or may be 10% (for example, 8%). When the ratio (S2/S1) is not more than the above-described upper limit, an energy density of the energy storage device 100 can be increased, for example. The ratio (S2/S1) may be not less than any of the lower limits described above and not more than any of the upper limits described above.

In the cross section (FIG. 2) perpendicular to the winding axis W of the electrode body 1, it is preferable that substantially no void should be present within the electrode body 1 at any position other than on the vertical line V passing through the winding axis W. In such a case, since a distance between the positive electrode and the negative electrode in the electrode body 1 can be kept relatively constant, the charge and discharge performance of the energy storage device 100 can be enhanced.

In the cross section (FIG. 2) perpendicular to the winding axis W of the electrode body 1, one or more voids 10 located above the liquid surface 8 of the excess electrolyte solution 7 and on the vertical line V passing through the winding axis W may be present within the electrode body 1.

The thickness of the electrode body 1 in a dry state and under no load (i.e., the length in the Y-axis direction in FIG. 2) is preferably 0.94 or less, and may be more preferably 0.92 or less or 0.90 or less (for example, 0.88 or less) as a ratio to the inside dimension T of the container 2 in the thickness direction (the Y-axis direction in FIG. 2) of the electrode body 1. Also in this case, since a particularly sufficient amount of electrolyte solution can be stored within the two or more voids 9, the capacity retention rate to be exhibited after charge and discharge cycles can be further increased. Meanwhile, the thickness of the electrode body 1 in the dry state and under no load is preferably 0.80 or more, more preferably 0.85 or more or 0.90 or more as a ratio to the inside dimension T of the container 2 in the thickness direction of the electrode body 1. In this case, the energy density of the energy storage device 100 can be increased, for example. The thickness of the electrode body 1 in the dry state and under no load may be not less than any of the lower limits described above and not more than any of the upper limits described above.

Specific forms of the positive electrode, the negative electrode, and the separator constituting the electrode body, and the electrolyte solution will be described in detail below.

### (Positive electrode)

The positive electrode includes a positive electrode substrate and a positive electrode active material layer which is disposed on the positive electrode substrate directly or via an intermediate layer.

The positive electrode substrate has conductivity. Whether or not the positive electrode substrate has "conductivity" is determined on the basis of a volume resistivity measured in conformity with JIS H 0505:1975, with 10⁷ Ω·cm being set to a threshold value. As the material of the positive electrode substrate, a metal such as aluminum, titanium, tantalum, or stainless steel, or an alloy thereof is used. Among the above, aluminum or an aluminum alloy is preferable from the standpoint of potential resistance, high conductivity, and cost. Examples of the positive electrode substrate include a foil, a vapor-deposited film, a mesh, and a porous material and a foil is preferable from the standpoint of cost. Therefore, an aluminum foil or an aluminum alloy foil should preferably be used for the positive electrode substrate. As the aluminum or aluminum alloy, A1085, A3003, and A1N30, for example, specified in JIS H 4000:2014 or JIS H 4160:2006 are exemplified.

An average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate is set to be within the above range, the energy density per volume of the energy storage device can be increased while increasing the strength of the positive electrode substrate.

The intermediate layer is a layer which is disposed between the positive electrode substrate and the positive electrode active material layer. As the intermediate layer contains a conductive agent such as carbon particles, contact resistance between the positive electrode substrate and the positive electrode active material layer is reduced. A configuration of the intermediate layer is not particularly limited, and contains, for example, a binder and a conductive agent.

The positive electrode active material layer includes a positive electrode active material. The positive electrode active material layer contains, as necessary, optional ingredients such as a conductive agent, a binder, a thickener, and a filler.

The positive electrode active material can be selected as appropriate from known positive electrode active materials. As the positive electrode active material for a lithium-ion secondary battery, a material capable of occluding and releasing lithium ions is usually used. Examples of the positive electrode active material include lithium-transition metal composite oxides having an α-NaFeO₂-type crystal structure, lithium-transition metal composite oxides having a spinel-type crystal structure, a polyanion compound, a chalcogen compound, and sulfur. Examples of the lithium-transition metal composite oxides having the α-NaFeO₂-type crystal structure include Li[LiₓNi₍₁₋ₓ₎]O₂ (0 ≤ x < 0.5), Li[LiₓNi_{γ}Co_{(1-x-γ})]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-y), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ+β < 1, 0 < 1-x-γ-β). Examples of the lithium-transition metal composite oxides having the spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. Surfaces of these materials may be coated with other materials. In the positive electrode active material layer, one of these materials may be used alone, or two or more of these materials may be mixed and used.

In one embodiment of the present invention, the positive electrode active material is preferably a lithium-transition metal composite oxide, and more preferably a lithium-transition metal composite oxide having the α-NaFeO₂-type crystal structure. Also, the lithium-transition metal composite oxide preferably contains a nickel element as a transition metallic element. A content ratio (Ni/Me) of the nickel element (Ni) to the transition metallic element (Me) in the lithium-transition metal composite oxide is preferably 0.5 or more and more preferably 0.6 or more in terms of molar ratio. Meanwhile, the content ratio (Ni/Me) may be 1 or less, or may be 0.9 or less.

By the use of such a lithium-transition metal composite oxide, the energy density can be increased. Meanwhile, in such a lithium-transition metal composite oxide, e.g., a lithium-transition metal composite oxide having a high content ratio of nickel element, in particular, particle cracking is likely to occur due to charge and discharge cycles. Thus, the capacity retention rate is generally likely to decrease. Therefore, when the present invention is applied to an energy storage device including a wound type electrode body having such a lithium-transition metal composite oxide as the positive electrode active material, it is possible to particularly effectively obtain the advantage that the capacity retention rate which is to be exhibited after the charge and discharge cycles is increased.

A lithium-transition metal composite oxide containing a nickel element preferably further contains at least one of a cobalt element or a manganese element in addition to the nickel element, and more preferably further contains both the cobalt element and the manganese element. A ratio ((Ni+Co+Mn)/Me) of the total content of the nickel element (Ni), the cobalt element (Co), and the manganese element (Mn) to the transition metallic element (Me) in the lithium-transition metal composite oxide is preferably 0.9 or more, and more preferably 0.95 or more in terms of molar ratio. Meanwhile, the ratio ((Ni+Co+Mn)/Me) may be 1 or less, or may be 0.99 or less. The lithium-transition metal composite oxide may further contain an element (for example, an aluminum element) other than the lithium element, oxygen element, and transition metallic element.

As the material of the positive electrode active material, one material may be used alone, or two or more materials may be mixed and used. In particular, in the positive electrode active material, it is preferable that the lithium-transition metal composite oxide should be contained in a proportion of 50% by mass or more (preferably 70 to 100% by mass, more preferably 80 to 100% by mass) to a total positive electrode active material used. It is more preferable to use a positive electrode active material that is substantially composed of only the lithium-transition metal composite oxide.

The positive electrode active material is usually in the form of particles (powder). An average particle size of the positive electrode active material is preferably, for example, 0.1 µm or more and 20 µm or less. When the average particle size of the positive electrode active material is set to the above-described lower limit or more, the positive electrode active material is easily manufactured or handled. When the average particle size of the positive electrode active material is set to the above-described upper limit or less, electron conductivity of the positive electrode active material layer is improved. When a composite of a positive electrode active material and another material is used, the average particle size of the composite is assumed as the average particle size of the positive electrode active material. The "average particle size" refers to a value indicating 50% in a volume-based cumulative size distribution calculated according to JIS Z 8819-2:2001 on the basis of a particle size distribution measured by a laser diffraction and scattering method applied to a diluted solution in which particles are diluted with a solvent according to JIS Z 8825:2013.

In order to obtain powder having a predetermined particle size, a pulverizer, a classifier, or the like, is used. Examples of a method of pulverization include a method using a mortar, a ball mill, a sand mill, a vibrating ball mill, a planetary ball mill, a jet mill, an opposed jet mill, a spiral jet mill, a sieve, or the like. In performing the pulverization, wet pulverization in which water or an organic solvent such as hexane is present can also be used. As a method of classification, a sieve, an air classifier, or the like, is used as necessary in both a dry method and a wet method.

The positive electrode active material may be in the form of either a primary particle (single-particle) or a secondary particle formed by aggregation of a plurality of primary particles. However, the positive electrode active material being in the form of a secondary particle is a preferred embodiment of the present invention. When the positive electrode active material is in the form of a secondary particle, particle cracking is likely to occur due to charge and discharge cycles. Thus, the capacity retention rate is generally likely to decrease. Therefore, when the present invention is applied to an energy storage device including a wound type electrode body which includes the positive electrode active material in the form of secondary particles, it is possible to particularly effectively obtain the advantage that the capacity retention rate which is to be exhibited after the charge and discharge cycles is increased.

A content of the positive electrode active material in the positive electrode active material layer is preferably 50% by mass or more and 99% by mass or less, more preferably 70% by mass or more and 98% by mass or less, and still more preferably 80% by mass or more and 95% by mass or less. When the content of the positive electrode active material is set to be within the above range, both high energy density and manufacturability of the positive electrode active material layer can be achieved.

The conductive agent is not particularly limited as long as it is a material having conductivity. Examples of such a conductive agent include carbonaceous materials, metals, and conductive ceramic. Examples of the carbonaceous materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, and Ketjen black. Examples of the graphene-based carbon include graphene, carbon nanotubes (CNTs), and fullerene. Examples of the shape of the conductive agent include a powdery form and a fibrous form. As the conductive agent, one of these materials may be used alone, or two or more of these materials may be mixed and used. Moreover, these materials may be composited and used. For example, a composite material of carbon black and a CNT may be used. Among the above, carbon black is preferable and acetylene black is particularly preferable from the standpoint of the electron conductivity and coatability.

A content of the conductive agent in the positive electrode active material layer is preferably 1% by mass or more and 10% by mass or less, and more preferably 3% by mass or more and 9% by mass or less. When the content of the conductive agent is set to be within the above range, the energy density of the energy storage device can be increased.

Examples of the binder include thermoplastic resins such as fluororesins (e.g. polytetrafluoroethylene (PTFE) and polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers.

A content of the binder in the positive electrode active material layer is preferably 1% by mass or more and 10% by mass or less, and more preferably 3% by mass or more and 9% by mass or less. When the content of the binder is set to be within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like. When a thickener is used, a content of the thickener in the positive electrode active material layer is preferably 5% by mass or less, and more preferably 1% by mass or less. The technique disclosed herein can be preferably implemented in an embodiment in which the positive electrode active material layer contains no thickener.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof. When a filler is used, a content of the filler in the positive electrode active material layer is preferably 5% by mass or less, and more preferably 1% by mass or less. The technique disclosed herein can be preferably implemented in an embodiment in which the positive electrode active material layer contains no filler.

The positive electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Nb, and W, as the constituents other than the positive electrode active material, the conductive agent, the binder, the thickener, and the filler.

### (Negative electrode)

A negative electrode includes a negative electrode substrate and a negative electrode active material layer which is disposed on the negative electrode substrate directly or via an intermediate layer. A configuration of the intermediate layer is not particularly limited, and can be selected from the configurations exemplified for the positive electrode, for example.

The negative electrode substrate has conductivity. As the material of the negative electrode substrate, a metal such as copper, nickel, stainless steel, nickel-plated steel, or aluminum, an alloy thereof, a carbonaceous material, or the like, is used. Among the above, copper or a copper alloy is preferable. Examples of the negative electrode substrate include a foil, a vapor-deposited film, a mesh, and a porous material, and a foil is preferable from the standpoint of cost. Therefore, a copper foil or a copper alloy foil should preferably be used for the negative electrode substrate. Examples of the copper foil include a rolled copper foil and an electrolytic copper foil.

An average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate is set to be within the above range, the energy density per volume of the energy storage device can be increased while increasing the strength of the negative electrode substrate.

The negative electrode active material layer includes a negative electrode active material. The negative electrode active material layer contains, as necessary, optional ingredients such as a conductive agent, a binder, a thickener, and a filler. The optional ingredients such as the conductive agent, the binder, the thickener, and the filler can be selected from the materials exemplified for the positive electrode.

The negative electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Ta, Hf, Nb, and W as the constituents other than the negative electrode active material, the conductive agent, the binder, the thickener, and the filler.

The negative electrode active material can be selected as appropriate from known negative electrode active materials. As the negative electrode active material for a lithium-ion secondary battery, a material capable of occluding and releasing lithium ions is usually used. Examples of the negative electrode active material include metal Li; metals or semimetals such as Si and Sn; metal oxides or semimetal oxides such as Si oxides, Ti oxides, and Sn oxides; titanium-containing oxides such as Li₄Ti₅O₁₂, LiTiO₂, and TiNb₂O₇; polyphosphate compounds; silicon carbide; and carbon materials such as graphite and non-graphitic carbon (easily-graphitizable carbon or non-graphitizable carbon). Among these materials, graphite and non-graphitic carbon are preferable. In the negative electrode active material layer, one of these materials may be used alone, or two or more of these materials may be mixed and used.

The above "graphite" refers to a carbon material in which average interplanar spacing (d₀₀₂) of a plane (002) determined by an X-ray diffraction method is 0.33 nm or more but less than 0.34 nm before the graphite is subjected to charge and discharge or in a discharged state. Examples of the graphite include natural graphite and artificial graphite. Artificial graphite is preferable from the standpoint that a material having stable physical properties can be obtained.

The above "non-graphitic carbon" refers to a carbon material in which average interplanar spacing (d₀₀₂) of a plane (002) determined by an X-ray diffraction method is 0.34 nm or more and 0.42 nm or less before the non-graphitic carbon is subjected to charge and discharge or in a discharged state. Examples of the non-graphitic carbon include non-graphitizable carbon and easily-graphitizable carbon. Examples of the non-graphitic carbon include resin-derived materials, petroleum pitches or petroleum pitch-derived materials, petroleum coke or petroleum coke-derived materials, plant-derived materials, and alcohol-derived materials.

Here, the above "discharged state" means a state in which a discharge has been performed such that lithium ions, which can be occluded and released during charge and discharge, are sufficiently released from the carbon material serving as a negative electrode active material. For example, in a half-cell in which a negative electrode containing a carbon material as the negative electrode active material is used as a working electrode and metal Li is used as a counter electrode, the "discharged state" refers to the state in which an open circuit voltage is 0.7 V or more.

The above "non-graphitizable carbon" refers to a carbon material in which the above-mentioned d₀₀₂ is 0.36 nm or more and 0.42 nm or less.

The above "easily-graphitizable carbon" refers to a carbon material in which the above-mentioned d₀₀₂ is 0.34 nm or more but less than 0.36 nm.

In one embodiment of the present invention, as the negative electrode active material, a material having a large volume change caused by charge and discharge, specifically, a material whose volume change caused by charge and discharge is greater than or equal to 5% is suitably applied. Examples of such a material include carbon materials such as graphite and non-graphitic carbon, silicon materials such as Si and Si oxides, and tin materials such as Sn and Sn oxides. In a case where such a negative electrode active material having a large volume change caused by charge and discharge is used, an outflow of the electrolyte solution to the outside of the electrode body and depletion of the electrolyte solution within the electrode body due to the charge and discharge cycles are likely to occur. As a result, the capacity retention rate is likely to decrease. Therefore, when the present invention is applied to an energy storage device including a wound type electrode body having such a negative electrode active material, it is possible to particularly effectively obtain the advantage that the capacity retention rate which is to be exhibited after the charge and discharge cycles is increased.

The negative electrode active material is usually in the form of particles (powder). An average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, a Si oxide, a Sn oxide, or the like, the average particle size thereof may be 1 nm or more and 1 µm or less. When the average particle size of the negative electrode active material is set to the above-described lower limit or more, the negative electrode active material is easily manufactured or handled. When the average particle size of the negative electrode active material is set to the above-described upper limit or less, electron conductivity of the negative electrode active material layer is improved. In order to obtain powder having a predetermined particle size, a pulverizer, a classifier, or the like, is used. A method of pulverization and a method of classification can be selected, for example, from the methods exemplified for the positive electrode. When the negative electrode active material is a metal such as metal Li, the negative electrode active material layer may be in the form of foil.

A content of the negative electrode active material in the negative electrode active material layer is preferably 60% by mass or more and 99% by mass or less, and more preferably 90% by mass or more and 98% by mass or less. When the content of the negative electrode active material is set to be within the above range, both high energy density and manufacturability of the negative electrode active material layer can be achieved.

### (Separator)

The separator can be selected as appropriate from known separators. As the separator, for example, a separator formed of only a base material layer, a separator in which a heat-resistant layer containing heat-resistant particles and a binder is formed on one surface or both surfaces of the base material layer, or the like, can be used. Examples of the shape of the base material layer of the separator include a woven fabric, a nonwoven fabric, and a porous resin film. Among these shapes, a porous resin film is preferable from the standpoint of the strength, and a nonwoven fabric is preferable from the standpoint of liquid retainability of the non-aqueous electrolyte. As the material of the base material layer of the separator, for example, polyolefins such as polyethylene and polypropylene are preferable from the standpoint of a shutdown function, and polyimide, aramid, and the like, are preferable from the standpoint of oxidative decomposition resistance. A composite material of these resins may be used as the base material layer of the separator.

The heat-resistant particles contained in the heat-resistant layer should preferably have a mass decrease of not more than 5% when heated from room temperature to 500 °C in an air atmosphere at 1 atm, and more preferably have a mass decrease of not more than 5% when heated from the room temperature to 800 °C. Examples of the material in which a mass decrease is not greater than a predetermined amount include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; and substances derived from mineral resources such as talc, montmorillonite, boehmite, zeolite, apatite, kaolin, mullite, spinel, olivine, sericite, bentonite, and mica or synthetic substances thereof. As the inorganic compound, each of these substances, whether in its individual form or as a composite, may be used alone, or two or more of these substances may be mixed and used. Among these inorganic compounds, silicon oxide, aluminum oxide, or aluminosilicate is preferable from the standpoint of safety of the energy storage device.

Porosity of the separator is preferably not greater than 80% by volume from the standpoint of strength, and is preferably not less than 20% by volume from the standpoint of discharge performance. Here, the term "porosity" refers to a value based on volume, and means a value measured by a mercury porosimeter.

As the separator, a polymer gel composed of a polymer and a non-aqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel brings about an advantageous effect that liquid leakage is suppressed. As the separator, the above-described porous resin film or nonwoven fabric may be used in combination with the polymer gel.

### (Electrolyte solution)

The electrolyte solution can be selected as appropriate from known electrolyte solutions. As the electrolyte solution, a non-aqueous electrolyte solution may be used. The non-aqueous electrolyte solution contains a non-aqueous solvent and an electrolyte salt dissolved in this non-aqueous solvent.

The non-aqueous solvent can be selected as appropriate from known non-aqueous solvents. Examples of the non-aqueous solvent include cyclic carbonates, linear carbonates, carboxylic acid esters, phosphoric acid esters, sulfonic acid esters, ethers, amides, and nitriles. As the non-aqueous solvent, those obtained by substituting a part of hydrogen atoms contained in these compounds with a halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among the above, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among the above, EMC is preferable.

As the non-aqueous solvent, a cyclic carbonate or a linear carbonate is preferably used, and using a cyclic carbonate and a linear carbonate in combination is more preferable. By using the cyclic carbonate, dissociation of the electrolyte salt can be promoted to improve ionic conductivity of the non-aqueous electrolyte solution. By using the linear carbonate, viscosity of the non-aqueous electrolyte solution can be suppressed to be low. When a cyclic carbonate and a linear carbonate are used in combination, the volume ratio of the cyclic carbonate to the linear carbonate (cyclic carbonate: linear carbonate) is preferably, for example, in the range of 5:95 to 50:50.

The electrolyte salt can be selected as appropriate from known electrolyte salts. Examples of the electrolyte salt include a lithium salt, a sodium salt, a potassium salt, a magnesium salt, and an onium salt. Among the above, a lithium salt is preferable.

Examples of the lithium salt include inorganic lithium salts such as LiPF₆, LiPO₂F₂, LiBF₄, LiClO₄, and LiN(SO₂F)₂; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among the above, inorganic lithium salts are preferable, and LiPF₆, in particular, is preferable.

A content of the electrolyte salt in the non-aqueous electrolyte solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20 °C and at 1 atm. When the content of the electrolyte salt is set to be within the above range, the ionic conductivity of the non-aqueous electrolyte solution can be increased.

The non-aqueous electrolyte solution may contain an additive, apart from the non-aqueous solvent and the electrolyte salt. Examples of the additive include halogenated carbonate esters such as fluoroethylene carbonate (FEC) and difluoroethylene carbonate (DFEC); oxalates such as lithium bis(oxalato)borate (LiBOB), lithium difluoro(oxalato)borate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, and lithium difluorophosphate. One of these additives may be used alone, or two or more of these additives may be mixed and used.

A content of the additive contained in the non-aqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the non-aqueous electrolyte solution. When the content of the additive is set to be within the above range, the capacity retention performance or cycle performance after being subjected to high-temperature storage can be improved, and the safety can be further improved.

### <Energy Storage Apparatus>

The energy storage device of the present embodiment can be mounted as an energy storage unit (battery module), which has been configured by assembling a plurality of energy storage devices 100, in power sources for automobiles such as electric vehicles (EVs), hybrid electric vehicles (HEVs), or plug-in hybrid electric vehicles (PHEVs), or power sources for power storage, and the like. In this case, it is sufficient if the technique of the present invention is applied to at least one energy storage device included in the energy storage unit.

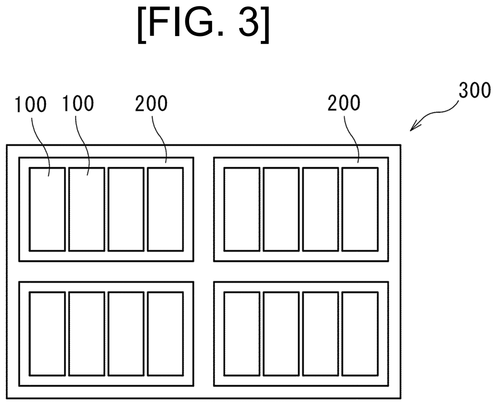

FIG. 3 illustrates an example of an energy storage apparatus 300 in which energy storage units 200, which are each configured by assembling two or more electrically connected energy storage devices 100, are further assembled. The energy storage apparatus 300 may include a bus bar (not illustrated) that electrically connects two or more energy storage devices 100, a bus bar (not illustrated) that electrically connects two or more energy storage units 200, and the like. The energy storage unit 200 or the energy storage apparatus 300 may include a state monitoring apparatus (not illustrated) which monitors the state of one or more energy storage devices.

### <Method for Manufacturing Energy Storage Device>

A method for manufacturing the energy storage device of the present embodiment can be selected as appropriate from known methods. The above-mentioned manufacturing method includes, for example, preparing a flat-shaped wound type electrode body, preparing an electrolyte solution, and accommodating the electrode body and the electrolyte solution in a container. Preparing the electrode body includes preparing a positive electrode and a negative electrode, and forming the electrode body by winding the positive electrode and the negative electrode with a separator interposed therebetween. In the above-mentioned manufacturing method, when the electrode body is accommodated in the container, the electrode body is accommodated in such an orientation that a winding axis of the electrode body and a thickness direction of the electrode body are substantially parallel to a bottom surface of the container.

Accommodating the electrolyte solution in the container can be selected as appropriate from known methods. For example, the electrolyte solution may be injected into the container through an inlet formed therein, and then the inlet may be sealed. In addition, as described above, the number of voids within the electrode body located below a liquid surface of an excess electrolyte solution and on a vertical line passing through a winding axis of the electrode body can be adjusted by a relative thickness of the electrode body with respect to an inside dimension of the container, an amount of the electrolyte solution to be injected, and the like.

### <Other Embodiments>

The energy storage device according to the present invention is not limited to the above-described embodiment, and various alterations may be made within a range that does not depart from the gist of the present invention. For example, in a configuration of one embodiment, a configuration of another embodiment may be added, or a part of the configuration of the one embodiment may be replaced with the configuration of the other embodiment or with a well-known technique. Further, a part of the configuration of the one embodiment may be deleted. Furthermore, a well-known technique may be added to the configuration of the one embodiment.

In the above-described embodiment, the energy storage device in which one electrode body is accommodated in a container has been described. However, the number of electrode bodies is not limited. An energy storage device 101 according to one embodiment of the present invention illustrated in FIG. 4 includes two electrode bodies 1a and 1b, an electrolyte solution, and a container 102 for accommodating therein the aforementioned elements. In the present embodiment, two electrode bodies 1a and 1b are accommodated in the container 102, and the electrode bodies 1a and 1b are disposed in the container 102 such that winding axes Wa and Wb of the electrode bodies 1a and 1b conform to a horizontal direction (X-axis direction), and a thickness direction of the electrode bodies 1a and 1b also conforms to a horizontal direction (Y-axis direction). The two electrode bodies 1a and 1b are disposed in such a state that they overlap one another in the thickness direction (Y-axis direction in FIG. 4). In the energy storage device 101, in a cross section (FIG. 4) perpendicular to the winding axes Wa and Wb of the electrode bodies 1a and 1b, three voids 9a which are located below a liquid surface 108 of an excess electrolyte solution 107 and on a vertical line Va passing through the winding axis Wa of one of the electrode bodies, i.e., the electrode body 1a, are present within the electrode body 1a. In addition, in the cross section (FIG. 4) perpendicular to the winding axes Wa and Wb of the electrode bodies 1a and 1b, three voids 9b which are located below the liquid surface 108 of the excess electrolyte solution 107 and on a vertical line Vb passing through the winding axis Wb of an other one of the electrode bodies, i.e., the electrode body 1b, are present within the electrode body 1b.

In a case where the energy storage device according to the present invention includes two or more electrode bodies, it is sufficient if two or more voids, which are located below the liquid surface of the excess electrolyte solution and on a vertical line passing through the winding axis of the electrode body, are present within at least one electrode body. Further, a winding core made of a non-porous member may be disposed at the central portion of the at least one electrode body.

In the above-described embodiments, the case where the energy storage device is used as a chargeable and dischargeable non-aqueous electrolyte solution secondary battery (for example, a lithium-ion secondary battery) has been described. However, the energy storage device may be of any type, shape, size, and capacity. The present invention can also be applied to various secondary batteries and capacitors such as electric double layer capacitors or lithium-ion capacitors. Further, the present invention can also be applied to an energy storage device using an electrolyte solution other than the non-aqueous electrolyte solution.

### EXAMPLES

The present invention will be more specifically described with reference to Examples, but the present invention is not limited to the Examples described below.

### [Example 1]

A positive electrode mixture paste was prepared by using LiNi_{0.6}Co_{0.2}Mn_{0.2}O₂ as a positive electrode active material, acetylene black (AB) as a conductive agent, polyvinylidene fluoride (PVDF) as a binder, and N-methylpyrrolidone (NMP) as a dispersion medium. A mass ratio of the positive electrode active material, AB, and PVDF was 93:4:3 (in terms of solid content). The positive electrode mixture paste was applied to both surfaces of a strip-shaped positive electrode substrate made of aluminum foil, and dried to form a positive electrode active material layer. In this way, a strip-shaped positive electrode was obtained.

A negative electrode mixture paste was prepared by using graphite as a negative electrode active material, styrene-butadiene rubber (SBR) as a binder, carboxymethyl cellulose (CMC) as a thickener, and water as a dispersion medium. A mass ratio of the negative electrode active material, SBR, and CMC was 97.8:1:1.2 (in terms of solid content). The negative electrode mixture paste was applied to both surfaces of a strip-shaped negative electrode substrate made of copper foil, and dried to form a negative electrode active material layer. In this way, a strip-shaped negative electrode was obtained.

As the separator, a strip-shaped separator made of a polyethylene microporous film was prepared.

The strip-shaped positive electrode and the strip-shaped negative electrode were made to overlap one another with the strip-shaped separator interposed therebetween, and these elements were wound in a longitudinal direction to fabricate two flat-shaped electrode bodies.

LiPF₆ was dissolved at a concentration of 1.2 mol/dm³ in a mixed solvent in which ethylene carbonate and ethyl methyl carbonate were mixed at a volume ratio of 30:70, thereby obtaining a non-aqueous electrolyte solution.

In a state in which these two fabricated electrode bodies were made to overlap one another, the electrode bodies were accommodated in a rectangular container made of aluminum (see FIG. 4) such that the winding axes of the respective electrode bodies conform to the horizontal direction (X-axis direction), and the thickness direction of the respective electrode bodies also conforms to the horizontal direction (Y-axis direction), and a positive electrode terminal and a negative electrode terminal were attached to the container. The non-aqueous electrolyte solution was injected into the container and then the container was sealed to obtain the energy storage device of Example 1. In the energy storage device of Example 1, a ratio (hereinafter also referred to as "insertion coefficient") of the thickness of the electrode body in a dry state and under no load to the inside dimension of the container in the thickness direction of the electrode body was 0.871. In addition, for the energy storage device of Example 1, when the number of voids (hereinafter also referred to as a "void number") was measured by the method described above, in a cross section perpendicular to the winding axis of the electrode body, the voids located below a liquid surface of an excess electrolyte solution and on a vertical line passing through the winding axis of the electrode body, which were present within a single electrode body, was three. For the energy storage device of Example 1, when a ratio of a total area of the voids (hereinafter also referred to as a "void area ratio") was measured by the method described above, in the cross section perpendicular to the winding axis of the electrode body, the ratio of the total area of the two or more voids, which were located below the liquid surface of the excess electrolyte solution and on the vertical line passing through the winding axis of the electrode body, to the area of the electrode body below the liquid surface of the excess electrolyte solution was 6%.

### [Example 2 and Comparative Examples 1 and 2]

Each of the energy storage devices of Example 2 and Comparative Examples 1 and 2 was obtained in the same manner as in Example 1, except that the number of windings of the positive electrode, the negative electrode, and the separator in fabricating the electrode body was changed so that the insertion coefficient becomes that as indicated in Table 1, and the amount of the electrolyte solution injected was changed as appropriate. Specifically, the amount of the electrolyte solution injected in the energy storage device of Example 2 was made less than that of Example 1, and the amount of the electrolyte solution injected in the energy storage device of Comparative Example 2 was made less than that of Example 2. In addition, the amount of the electrolyte solution injected in the energy storage device of Comparative Example 1 was made substantially the same as that of Example 1. Table 1 shows the void number and the void area ratio measured by the above-described method in each of the obtained energy storage devices.

### [Evaluations]

### (Initial charge and discharge)

For each of the obtained energy storage devices, initial charge and discharge was conducted under the following conditions. In a constant-temperature bath at 25 °C, a constant current charge was performed at a charge current of 1.0 C until the voltage reached 4.10 V. Thereafter, a constant voltage charge was performed at 4.10 V. A condition for terminating the charge was set to the time when a total charge time reached 3 hours. Then, a rest period of 10 minutes was provided. A constant current discharge was performed at a discharge current of 1.0 C until the voltage indicated a discharge cutoff voltage of 2.50 V. An amount of electricity discharged at that time was assumed as an initial discharge capacity.

### (Charge and discharge cycle test)

For each of the energy storage devices after the above initial charge and discharge, the following charge and discharge cycle test was performed. After storing the energy storage device for three hours in a constant-temperature bath at 45 °C, a constant current-constant voltage charge was performed at a charge current of 1.0 C and up to the voltage of 4.1 V. A condition for terminating the charge was set to the time when a total charge time reached 3 hours. Then, a rest period of 10 minutes was provided. A constant current discharge was performed at a discharge current of 1.0 C until the voltage indicated a discharge cutoff voltage of 2.50 V. Then, a rest period of 10 minutes was provided. These charge and discharge steps were assumed as one cycle, and this cycle was performed for 1000 times. These charge, discharge, and rest were performed in the constant-temperature bath at 45 °C.

### (Capacity retention rate)

A percentage of the discharge capacity at the 1000th cycle to the discharge capacity at the first cycle in the above-described charge and discharge cycle test was obtained as the discharge capacity retention rate. Table 1 shows the results.

**[Table 1]**

| | Insertion coefficient | Void number | Void area ratio (%) | Capacity retention rate (%) |
|---|---|---|---|---|
| Example 1 | 0.871 | 3 | 6 | 95 |
| Example 2 | 0.918 | 2 | 5 | 93 |
| Comparative Example 1 | 0.871 | 1 | 4 | 89 |
| Comparative Example 2 | 0.960 | 1 | 3 | 82 |

As indicated in Table 1, the capacity retention rate exhibited after the charge and discharge cycles exceeded 90% in each of the energy storage devices of Examples 1 and 2 in which the void number (i.e., the number of voids located below the liquid surface of the excess electrolyte solution and on the vertical line passing through the winding axis of the electrode body, which are present within a single electrode body, in a cross section perpendicular to the winding axis of the electrode body) was two or more, and it has been confirmed that the capacity retention rate was high in these Examples.

### INDUSTRIAL APPLICABILITY

The present invention can be applied to energy storage devices and the like which are used as power sources of electronic devices such as personal computers or communication terminals, automobiles, or the like.

### DESCRIPTION OF REFERENCE NUMERALS

100, 101 Energy storage device
1, 1a, 1b Electrode body
2, 102 Container
3 Positive electrode connecting member
4 Positive electrode external terminal
5 Negative electrode connecting member
6 Negative electrode external terminal
7, 107 Excess electrolyte solution
8, 108 Liquid surface
9, 9a, 9b Void
10 Void
11 Bottom surface
200 Energy storage unit
300 Energy storage apparatus
W, Wa, Wb Winding axis
V, Va, Vb Vertical line
T Inside dimension

## Claims

1. An energy storage device comprising:
an electrode body of a flat shape formed by winding a positive electrode and a negative electrode with a separator interposed therebetween;
an electrolyte solution; and
a container accommodating therein the electrode body and the electrolyte solution, wherein:
a winding axis of the electrode body is disposed along a horizontal direction;
an excess electrolyte solution, which is a part of the electrolyte solution, is present between the electrode body and the container; and
in a cross section perpendicular to the winding axis of the electrode body, two or more voids which are located below a liquid surface of the excess electrolyte solution and on a vertical line passing through the winding axis are present within the electrode body.

2. The energy storage device according to claim 1, wherein in the cross section perpendicular to the winding axis of the electrode body, substantially no void is present within the electrode body at any position other than on the vertical line passing through the winding axis.

3. The energy storage device according to claim 1 or 2, wherein the two or more voids are regions surrounded by the separator or a porous member other than the separator.

4. The energy storage device according to claim 1 or 2, wherein in the cross section perpendicular to the winding axis of the electrode body, a ratio of a total area of the two or more voids to an area of the electrode body below the liquid surface of the excess electrolyte solution is greater than 4%.

5. The energy storage device according to claim 1 or 2, wherein a thickness of the electrode body in a dry state and under no load is 0.94 or less as a ratio to an inside dimension of the container in a thickness direction of the electrode body.
